# EUROPÄISCHE PATENTSCHRIFT

(11) **EP 1 407 878 B1**
(45) Veröffentlichungstag und Bekanntmachung des Hinweises auf die Patenterteilung: **27.02.2008**
(21) Anmeldenummer: 03020317.8
(22) Anmeldetag: 09.09.2003
(51) Int. Cl.: B32B 11/00, E04D 5/10

(54) **Verwendung eines Folien-Bitumen-Verbundes**
Use of a composite material comprising films and bitumen& x9;& x9;
Utilisation d'un composé contenant des feuilles et du bitume

(30) Priorität: 08.10.2002 DE 10246864
(43) Veröffentlichungstag der Anmeldung: 14.04.2004
(73) Patentinhaber: Huhtamaki Forchheim Zweigniederlassung der Huhtamaki Deutschland GmbH & Co. KG, 91301 Forchheim (DE)
(72) Erfinder: Fürst, Michael, 91301 Forchheim (DE)
(74) Vertreter: Hutzelmann, Gerhard

(56) Entgegenhaltungen:
- EP-A- 0 317 337
- EP-A- 0 704 297
- EP-A- 0 764 748
- DE-A- 2 555 445
- GB-A- 1 418 997

## Beschreibung

Die Erfindung bezieht sich auf die Verwendung eines Folien-Bitumen-Verbundes mit wenigstens drei Schichten, als Abdeckbahn auf Dachflächen mit wenigstens zwei Folienschichten aus unterschiedlichen Materialien, wobei wenigstens eine der Folienschichten aus einem Polyolefin, aus Polypropylen, aus Polyamid, aus Polethylenterephtalat und/oder aus Polyacrylnitril hergestellt ist.

Es sind verschiedenste Abdeckfolien für Bitumendichtbahnen, insbesondere zur Abdichtung von Dachflächen, bekannt, die jedoch alle gravierende Nachteile aufweisen. Durch die Migration mineralischer Öle in die Kunststoffbahn und auch durch Wärmeausdehnung sowohl der Bitumenbahn als auch der Kunststofffolie löst sich mit der Zeit die Kunststofffolie von der Bitumenbahn (Curling). Die Verbunde weisen oftmals eine sehr geringe thermomechanische Festigkeit, insbesondere beim Begehen auf. Zudem werden derartige Verbunde in aufwendigen Prozessen hergestellt.

Aus der EP 0 764 748 ist beispielsweise eine rutschhemmende Dachunterziehbahn bekannt, die jedoch keine Vorkehrungen zur Verhinderung der Ablösung aufweist.

Aus der EP 0 704 297 ist ein wasserabweisendes Laminat bekannt, welches jedoch auch nicht die vorgenannten Nachteile zu überwinden vermag.

Aufgabe der Erfindung ist es, eine Verwendung eines Folien-Bitumen-Verbundes vorzuschlagen, welche die genannten Nachteile überwindet.

Diese Aufgabe wird erfindungsgemäß dadurch gelöst, daß die Folienschichten unterschiedliche Wärmeausdehnungskoeffizienten aufweisen, wobei eine weiter von - der bituminösen Schicht entfernt liegende Folienschicht einen größeren Längenausdehnungskoeffizienten aufweist als eine näher liegende Folienschicht, so daß die Folienschichten bei Erwärmung vor allem in ihrem Randbereich gegen die bituminöse Schicht gepresst werden.

Durch die Verwendung wenigstens zweier unterschiedlicher Folienschichten ist die Festigkeit und die Wärmestabilität des gesamten Verbundes in weiten Bereichen einstellbar. Zudem kann das Verhalten des Verbundes bei Temperaturschwankungen exakt eingestellt werden. Durch die Abfolge der unterschiedlichen Längenausdehnungskoeffizienten wird sichergestellt, daß sich die Ränder der Folienschicht nicht von der Bitumenschicht ablösen. Vielmehr werden diese Ränder an die Bitumenschicht angedrückt.

Dabei ist es vorteilhaft, wenn die PET-Schicht orientiert ist.

Damit können die mechanischen Eigenschaften der PET-Schicht in weiten Grenzen eingestellt werden.

Gemäß einer Fortbildung der Erfindung ist es auch sehr vorteilhaft, wenn die Folienschichten einzeln oder gemeinsam auf die bituminöse Bahn aufkaschiert sind.

Dadurch kann der Folienverbund auf einfache Art und Weise nachträglich auf eine Bitumenbahn aufgebracht werden.

Eine weitere sehr vorteilhafte Ausgestaltung der Erfindung ist auch darin zu sehen, daß die bituminöse Masse bzw. Bahn auf die Folienschichten beschichtet ist.

Hiermit wird ein zusätzlicher Arbeitsschritt eingespart. Die Kühlung der Folienschicht und der bituminösen Masse kann inline erfolgen und muss nicht separat erfolgen.

Eine äußerst vorteilhafte Fortbildung der Erfindung liegt auch darin, daß wenigstens eine der bituminösen Masse bzw. Bahn zugewandte Folienschicht des Verbundes als Barriere gegen mineralische Öle ausgebildet ist.

Hierdurch wird wirkungsvoll das Hineindiffundieren der mineralischen Öle in den Kunststoffverbund verhindert. Ein Quellen des Verbundes wird dadurch vermieden.

Es hat sich auch als sehr vorteilhaft erwiesen, wenn wenigstens ein Teil der Folienschichten wenigstens mit einer Kante über die bituminöse Bahn hinausreicht.

Damit können auf einfache Art und Weise mehrere Bahnen zusammengefügt werden. Undichtigkeiten an der Zusammensetztelle werden wirkungsvoll unterbunden.

Es hat sich aber auch als sehr vorteilhaft erwiesen, wenn wenigstens ein Teil der Folienschichten, vorzugsweise die der bituminösen Masse abgewandten Schichten gegenüber den anderen Schichten wenigstens entlang einer Kante zurückgesetzt sind.

Hierdurch lassen sich aneinanderstoßende Bahnen ebenfalls sehr einfach und sicher miteinander verbinden.

Eine vorteilhafte Fortbildung der Erfindung liegt auch darin, daß die Oberfläche der der bituminösen Schicht abgewandten Seite des Kunststoffverbundes rutschhemmend ausgebildet ist.

Dadurch wird ein versehentliches Ausrutschen beim Verlegen des Verbundes verhindert.

Es hat sich dabei als sehr vorteilhaft erwiesen, wenn die rutschhemmende Ausbildung durch eine Beschichtung realisiert ist.

Dabei hat es sich als sehr vorteilhaft erwiesen, wenn die Beschichtung wenigstens entlang einer Kante des Verbundes gegenüber den Folienschichten und/oder der bituminösen Masse zurückgesetzt aufgebracht ist.

Hierdurch ist sichergestellt, daß sich aneinanderliegende Bahnen sicher und dicht aneinander siegeln lassen.

Als sehr vorteilhaft hat es sich auch erwiesen, wenn die rutschhemmende Ausbildung durch eine wenigstens partielle Prägung der Oberflächenfolie realisiert ist.

Eine Prägung verhindert wirkungsvoll ein Rutschen insbesondere bei feuchter Oberfläche.

Dabei hat es sich als sehr vorteilhaft erwiesen, wenn die Prägung wenigstens entlang einer Kante des Verbundes zurückgesetzt ausgebildet ist.

Hiermit wird wieder ein einwandfreies aneinandersiegeln zweier nebeneinander liegender Bahnen sichergestellt.

Es hat sich auch als sehr vorteilhaft erwiesen, wenn die rutschhemmende Ausbildung durch eine coextrudierte Folie des SPS-Typs realisiert ist.

Es ist aber auch sehr vorteilhaft, wenn die rutschhemmende Ausbildung durch ein thermoplastisches Elastomer mit einem Metallocen-Komplex realisiert ist.

Die Verwendung eines rutschhemmenden Kunststoffes sichert eine vollflächige Rutschhemmung.

Erfindungsgemäß sehr vorteilhaft ist es auch, wenn die einzelnen Folienschichten nach ihrer thermischen Stabilität kombiniert sind.

Hierdurch kann der Folienverbund entsprechend den auftretenden Temperaturen ausgebildet werden.

Es hat sich aber auch als sehr vorteilhaft erwiesen, wenn die einzelnen Folienschichten nach ihrer mechanischen Festigkeit kombiniert sind.

Hiermit kann der Folienverbund auf die zu erwartenden mechanischen Belastungen, z.B. Trittsicherheit, eingestellt werden.

Dabei ist es sehr vorteilhaft, wenn zwischen zwei aufeinander folgenden Schichten ein Haftvermittler und/oder Kleber vorgesehen ist.

Dadurch wird der Zusammenhalt benachbarter Schichten verbessert.

Es hat sich auch als sehr vorteilhaft erwiesen, wenn zwischen zwei aufeinanderfolgenden Schichten eine Barriereschicht, insbesondere für mineralische Öle, Sauerstoff und/oder UV Strahlung, vorgesehen ist.

Hiermit werden schädliche Einwirkungen verhindert.

Es ist gemäß einer weiteren Ausgestaltung der Erfindung auch sehr vorteilhaft, wenn eine Lackschicht als Barriere insbesondere für Öle, Sauerstoff und/oder UV-Strahlung vorgesehen ist.

Lackschichten lassen sich besonders einfach auftragen.

Eine weitere äußerst vorteilhafte Fortbildung der Erfindung liegt auch darin, daß auf der den Folienschichten abgewandten Oberfläche der bituminösen Bahn ein Release-Liner vorgesehen ist.

Dabei hat es sich als vorteilhaft erwiesen, wenn als Release-Liner ein Releasepapier oder eine Releasefolie vorgesehen ist.

Insbesondere die Verwendung einer Releasefolie, aber auch die Verwendung eines dünnen Releasepapiers verbessert das Handling beim Ausbringen des Verbundes.

Es hat sich als sehr vorteilhaft erwiesen, wenn der Release-Liner mit Silikon beschichtet ist.

Silikon weisst hervorragende Releaseeigenschaften auf.

Es hat sich auch als sehr vorteilhaft erwiesen, wenn der Release-Liner aus mehreren Abschnitten besteht.

Dadurch wird das Ausbringen der Bahnen nochmals erheblich erleichtert, da die Bahnen abschittsweise ausgebracht werden können.

In den Zeichnungen ist die Erfindung anhand eines Ausführungsbeispiels veranschaulicht.

Dabei zeigen:
- Fig. 1: einen Schnitt durch einen Folien-Bitumen-Mehrschichtaufbau, und
- Fig. 2: ein Schaubild eines derartigen Verbundes, der auf einem Dach ausgebracht sein kann.

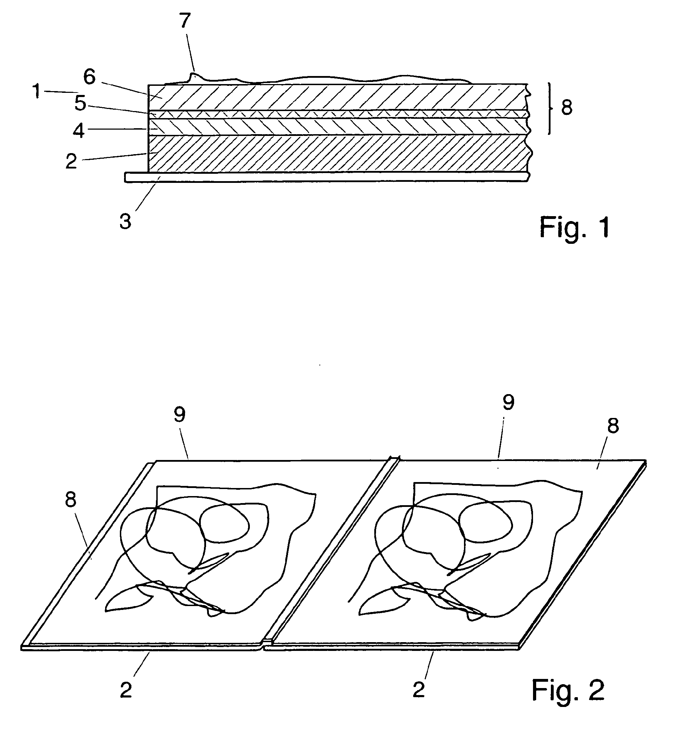

Mit 1 ist in Fig. 1 ein mehrschichtiger Folien-Bitumen-Verbund bezeichnet, dessen unterste Schicht 2, die aus einer kaltselbstklebenden Bitumenmischung besteht, von einer silikonisierten Releasefolie 3 bedeckt ist. Auf der anderen Seite der Bitumenschicht 2 ist eine Barriereschicht 4 vorgesehen, welche die Migration von in der Bitumenschicht 2 enthaltenen mineralischen Ölen verhindert. Die Barriereschicht 4 kann zum Beispiel aus einem Polyamid, einer PA-Legierung, PET, O-PET oder einem Lack bestehen. Auf diese Barriereschicht 4 folgt eine Kleber/Haftvermittlerschicht 5, welche aus einem reinen Haftvermittler, einer Mischung aus Haftvermittler und Polypropylen oder Polyethylen oder dergleichen bestehen kann, aber auch ein Hotmelt-Kleber, ein PU-Kleber oder dergleichen sein kann. Auf diese Kleber/Haftvermittlerschicht 5 folgt eine Deckschicht 6 aus einem Polyolefin. Die Deckschicht 6 kann dabei insbesondere aus PP, LLDPE, LDPE, HDPE oder Polyarylnitril bzw. deren Derivaten und/oder Mischungen bestehen.

Es ist denkbar, daß je nach Einsatzzweck weitere Folienschichten vorgesehen sind, die bestimmte mechanische, physikalische oder chemische Eigenschaften aufweisen.

Auf der Oberseite der Deckschicht 6 ist eine Antirutschbeschichtung 7 vorgesehen.

Die Folienschichten 8, welche aus der Barriereschicht 4, der Haftvermittlerschicht 5 und der Deckschicht 6 bestehen überragen die Bitumenschicht 2 an wenigstens einer Kante. Es ist aber auch denkbar, daß die Folienschichten die Bitumenschicht 2 an mehreren Kanten überragen oder auch an einer oder mehreren Kanten gegenüber der Bitumenschicht 2 zurücktreten. Je nach Anwendungsfall werden dadurch an den Zusammensetzstellen verschiedener Bahnen 9 Undichtigkeiten vermieden. Sowohl die aneinanderliegenden Bitumenschichten 2 als auch die Folienschichten 8 zweier Bahnen 9 können jeweils miteinander verschweisst bzw. verklebt werden.

Die Releasefolie 3 hat gegenüber der bisherigen Verwendung von relativ dicken Releasepapier, bedingt durch den Bitumenauftrag im heissen Zustand, den großen Vorteil, daß bei der Verarbeitung nur noch wenig Abfall anfällt und auch die Releaseeigenschaften nicht durch Feuchtigkeit beeinträchtigt werden. Dabei ist es auch denkbar, daß die Releasefolie 3 geteilt ist, wodurch diese in mehreren Stücken abgezogen werden kann. Dies kann die Verarbeitung erheblich erleichtern.

Durch die Anordnung einer Barriereschicht 4 wird ein Quellen der der Bitumenschicht 2 zugewandten Folienbahn 5/6 durch Migration mineralischer Öle vermieden. Beim Quellen besteht die Gefahr, daß sich die Folie 8 von der Bitumenbahn 2 löst. Bei geeigneter Auswahl der Folienschichten 4 und 6 kann ein Lösen der Folie 8 von der Bitumenschicht 2 durch Wärmeeinwirkung verhindert werden. Die Folienschichten 4 und 6 müssen so ausgewählt sein, daß die Wärmeausdehnung der Folienschicht 6 größer ist als die der Folienschicht 4. Damit wird die Folie 8 bei höheren Temperaturen bei denen sich die Klebkraft der Bitumenschicht 2 verringert regelrecht gegen die Bitumenschicht 2 gepresst. Dies ist vor allem an den Rändern ersichtlicht, da durch diese Ausgestaltung das sogenannte Curling nicht mehr auftritt, welches bei gebräuchlichen Folien, z.B. gereckte, orientierte und cross-laminierte HDPE-Folien mit symmetrischem Folienaufbau, für Bitumenbahnen auftritt.

Durch eine geeignete Auswahl der Deckfolie 6 kann auch die jeweils gewünschte mechanische Festigkeit des Verbundes 1 ausgewählt werden. So kann der Verbund 1 durchaus trittfest ausgebildet werden.

Die Dicken der Barriereschicht 4 liegen zwischen 2 und 110µm, die der Kleber /Haftvermittlerschicht 5 zwischen 1 und 130µm und die der Deckfolie 6 zwischen 5 und 300µm.

Bei der Herstellung des Verbundes 1 wird der Folienverbund 8 oder wenigstens ein Teil davon gefertigt. Darauf wird die Bitumenbahn 2 entweder im bereits teilweise abgekühlten Zustand aufkaschiert oder direkt auf die Folienschichten 8 aufgebracht. Beim Aufbringen durch z.B. eine Auslaufdüse muß eine Kühlvorrichtung, z.B. eine Kühlwalze für die Folienschichten 8 vorgesehen sein. Es bietet sich dabei entweder eine Stahlbandkühlung oder eine Wasserkühlung an.

Erst anschließend wird die Releasefolie 3 aufgebracht. Diese muss deswegen nicht thermisch stabil sein, wie dies bei den bisher üblichen Herstellungsverfahren notwendig war. Diese Releasefolie 3 kann dann entsprechend den gewünschten Spleis- und Weiterreisseigenschaften ausgewählt werden. Durch das sofortige und direkte Zusammenfügen der Bitumenbahn 2 und des Folienverbundes 8 wird auch ein erhöhter Zusammenhalt erreicht.

## Patentansprüche

1. Verwendung eines Folien-Bitumen-Verbundes(1) mit wenigstens drei Schichten, als Abdeckbahn auf Dachflächen, mit wenigstens zwei Folienschichten(4,6) aus unterschiedlichen Materialien, wobei wenigstens eine der Folienschichten aus einem Polyolefin, aus Polypropylen, aus Polyamide aus Polyethylenterephtalat und/oder aus Polyacrylnitril hergestellt ist, **dadurch gekennzeichnet, daß** die Folienschichten(4,6) unterschiedliche Wärmeausdehnungskoeffizienten aufweisen, wobei eine weiter von der bituminösen Schicht(2) entfernt liegende Folienschicht(6) einen größeren Längenausdehnungskoeffizienten aufweist als eine näher liegende Folienschicht(4), so daß die Folienschichten(4,6) bei Erwärmung vor allem in ihrem Randbereich gegen die bituminöse Schicht(2) gepresst werden.

2. Verwendung nach Anspruch 1, **dadurch gekennzeichnet, daß** die PET-Schicht orientiert ist.

3. Verwendung nach Anspruch 1 oder 2, **dadurch gekennzeichnet, daß** die Folienschichten(4,6) einzeln oder gemeinsam auf die bituminöse Bahn(2) aufkaschiert sind.

4. Verwendung nach einem der Ansprüche 1 bis 3, **dadurch gekennzeichnet, daß** die bituminöse Masse bzw. Bahn(2) auf die Folienschichten(4,6) beschichtet ist.

5. Verwendung nach einem der Ansprüche 1 bis 4, **dadurch gekennzeichnet, daß** wenigstens eine der bituminösen Masse bzw. Bahn(2) zugewandte Folienschicht(4) des Verbundes(1) als Barriere gegen mineralische Öle ausgebildet ist.

6. Verwendung nach einem der Ansprüche 1 bis 5, **dadurch gekennzeichnet, daß** wenigstens ein Teil der Folienschichten(4,6) wenigstens mit einer Kante über die bituminöse Bahn(2) hinausreicht.

7. Verwendung nach einem der Ansprüche 1 bis 6, **dadurch gekennzeichnet, daß** wenigstens ein Teil der Folienschichten(4,6), vorzugsweise die der bituminösen Masse(2) abgewandten Schichten(6) gegenüber den anderen Schichten(4) wenigstens entlang einer Kante zurückgesetzt sind.

8. Verwendung nach einem der Ansprüche 1 bis 7, **dadurch gekennzeichnet, daß** die Oberfläche(7) der der bituminösen Schicht(2) abgewandten Seite des Kunststoffverbundes rutschhemmend ausgebildet ist.

9. Verwendung nach Anspruch 8, **dadurch gekennzeichnet, daß** die rutschhemmende Ausbildung durch eine Beschichtung realisiert ist.

10. Verwendung nach Anspruch 9, **dadurch gekennzeichnet, daß** die Beschichtung wenigstens entlang einer Kante des Verbundes gegenüber den Folienschichten(4,6) und/oder der bituminösen Masse(2) zurückgesetzt aufgebracht ist.

11. Verwendung nach einem der Ansprüche 8, 9 oder 10, **dadurch gekennzeichnet, daß** die rutschhemmende Ausbildung durch eine wenigstens partielle Prägung der Oberflächenfolie realisiert ist.

12. Verwendung nach Anspruch 11, **dadurch gekennzeichnet, daß** die Prägung wenigstens entlang einer Kante des Verbundes zurückgesetzt ausgebildet ist.

13. Verwendung nach einem der Ansprüche 8 bis 12, **dadurch gekennzeichnet, daß** die rutschhemmende Ausbildung durch eine coextrudierte Folie des SPS-Typs realisiert ist.

14. Verwendung nach einem der Ansprüche 8 bis 13, **dadurch gekennzeichnet, daß** die rutschhemmende Ausbildung durch ein thermoplastisches Elastomer mit einem Metallocen-Komplex realisiert ist.

15. Verwendung nach einem der Ansprüche 1 bis 14, **dadurch gekennzeichnet, daß** die einzelnen Folienschichten nach ihrer thermischen Stabilität kombiniert sind.

16. Verwendung nach einem der Ansprüche 1 bis 15, **dadurch gekennzeichnet, daß** die einzelnen Folienschichten(4,6) nach ihrer mechanischen Festigkeit kombiniert sind.

17. Verwendung nach einem der Ansprüche 1 bis 16, **dadurch gekennzeichnet, daß** zwischen zwei aufeinander folgenden Schichten(4,6) ein Haftvermittler(5) und/oder Kleber vorgesehen ist.

18. Verwendung nach einem der Ansprüche 1 bis 17, **dadurch gekennzeichnet, daß** zwischen zwei aufeinander folgenden Schichten(4,6) eine Barriereschicht insbesondere für mineralische Öle, Sauerstoff und/oder UV Strahlung vorgesehen ist.

19. Verwendung nach einem der Ansprüche 1 bis 18, **dadurch gekennzeichnet, daß** eine Lackschicht als Barriere insbesondere für Öle, Sauerstoff und/oder UV Strahlung vorgesehen ist.

20. Verwendung nach einem der Ansprüche 1 bis 19, **dadurch gekennzeichnet, daß** auf der den Folienschichten(4,6) abgewandten Oberfläche der bituminösen Bahn(2) ein Release-Liner(3) vorgesehen ist.

21. Verwendung nach Anspruch 20, **dadurch gekennzeichnet, daß** als Release-Liner(3) ein Releasepapier oder eine Releasefolie vorgesehen ist.

22. Verwendung nach Anspruch 20 oder 21, **dadurch gekennzeichnet, daß** der Release-Liner(3) mit Silikon beschichtet ist.

23. Verwendung nach einem der Ansprüche 20, 21 oder 22, **dadurch gekennzeichnet, daß** der Release-Liner(3) aus mehreren Abschnitten besteht.

## Claims

1. Use of a film - bitumen combination (1) with at least three layers as a membrane to cover roof areas, with at least two film layers (4, 6) made from different materials, where at least one of the film layers is produced from a polyolefin, from polypropylene, from polyamide, from polyethylene terephthalate and/or from polyacrylonitrile, **wherein** the film layers (4, 6) have different coefficients of thermal expansion, with a film layer (6) located further away from the bituminous layer (2) having a larger coefficient of elongation than a film layer (4) that is located closer, so that at least the edge area of the film layers (4, 6) is pressed against the bituminous layer (2) when heated.

2. Use according to claim 1, **wherein** the PET layer is oriented.

3. Use according to claim 1 or 2, **wherein** the film layers (4, 6) are laminated to the bituminous membrane (2) individually or together.

4. Use according to one of claims 1 to 3, **wherein** the bituminous compound / membrane (2) is coated on the film layers (4, 6).

5. Use according to one of claims 1 to 4, **wherein** at least one film layer (4) of the material combination (1) facing the bituminous compound / membrane (2) is designed to provide a mineral oil barrier.

6. Use according to one of claims 1 to 5, **wherein** at least one edge of at least part of the film layers (4, 6) projects beyond the bituminous membrane (2).

7. Use according to one of claims 1 to 6, **wherein** at least one edge of at least part of the film layers (4, 6), preferably the layers (6) facing away from the bituminous compound (2), is shorter than the other layers (4).

8. Use according to one of claims 1 to 7, **wherein** the surface (7) of the side of the plastic combination facing away from the bituminous layer (2) is treated to have non-slip properties.

9. Use according to claim 8, **wherein** the non-slip treatment is carried out by means of coating.

10. Use according to claim 9, **wherein** the coating is applied to be shorter than the film layers (4, 6) and / or the bituminous compound (2) at least along one edge of the material combination.

11. Use according to one of claims 8, 9 or 10, **wherein** the non-slip treatment is carried out by means of at least partial embossing of the surface film.

12. Use according to claim 11,**wherein** the embossing is carried out in such a way that it is shorter at least along one edge of the material combination.

13. Use according to one of claims 8 to 12, **wherein** the non-slip treatment is provided by a coextruded SPS film.

14. Use according to one of claims 8 to 13, **wherein** the non-slip treatment is provided by a thermoplastic elastomer with a metallocene complex.

15. Use according to one of claims 1 to 14, **wherein** the individual film layers are combined in accordance with their thermal stability.

16. Use according to one of claims 1 to 15, **wherein** the individual film layers (4, 6) are combined according to their mechanical strength.

17. Use according to one of claims 1 to 16, **wherein** a tie layer (5) and / or adhesive is provided between two adjacent layers (4, 6).

18. Use according to one of claims 1 to 17, **wherein** a barrier layer particularly against mineral oils, oxygen and / or UV radiation is provided between two adjacent layers (4, 6).

19. Use according to one of claims 1 to 18, **wherein** a layer of lacquer is provided as a barrier particularly against oils, oxygen and / or UV radiation.

20. Use according to one of the claims 1 to 19, **wherein** a release liner (3) is provided on the surface of the bituminous membrane (2) facing away from the film layers (4, 6).

21. Use according to claim 20, **wherein** a release paper or a release film is provided as the release liner (3).

22. Use according to claim 20 or 21, **wherein** the release liner (3) is coated with silicone

23. Use according to one of claims 20, 21 or 22, **wherein** the release liner (3) consists of several sections.

## Revendications

1. Utilisation d'un composé contenant du bitume et des feuilles (1) comportant au moins trois couches, comme lé de recouvrement de surfaces de toit, avec au moins deux couches de feuilles (4, 6) en différents matériaux, au moins une des couches de feuilles étant fabriquée en polyoléfine, en polypropylène, en polyamide, en polyéthylène téréphtalate, et/ou en polyacrylonitrile, **caractérisée en ce que** les couches de feuilles (4, 6) présentent différents coefficients de dilatation thermique, une couche de feuille (6) plus éloignée de la couche bitumineuse (2) présentant un coefficient de dilatation longitudinale supérieur à celui d'une couche de feuille (4) plus proche, de sorte que lors du réchauffement les couches de feuilles (4, 6) sont pressées contre la couche bitumineuse (2) surtout au niveau de leur bord.

2. Utilisation selon la revendication 1, **caractérisée en ce que** la couche PET est orientée.

3. Utilisation selon la revendication 1 ou 2, **caractérisée en ce que** les couches de feuilles (4, 6) sont appliquées séparément ou conjointement sur le lé bitumineux (2).

4. Utilisation selon l'une quelconque des revendications 1 à 3, **caractérisée en ce que** le lé et/ou la masse bitumineux(se) (2) revêt les couches de feuilles (4, 6).

5. Utilisation selon l'une quelconque des revendications 1 à 4, **caractérisée en ce qu'**au moins une couche de feuille (4) du composé (1) tournée vers le lé et/ou la masse bitumineux(se) (2) est réalisée sous forme de barrière contre les huiles minérales.

6. Utilisation selon l'une quelconque des revendications 1 à 5, **caractérisée en ce qu'**au moins une partie des couches de feuilles (4, 6) dépasse du lé bitumineux (2) au moins avec un bord.

7. Utilisation selon l'une quelconque des revendications 1 à 6, **caractérisée en ce qu'**au moins une partie des couches de feuilles (4, 6), de préférence les couches (6) opposées à la masse bitumineuse (2), est en retrait par rapport aux autres couches (4) au moins le long d'un bord.

8. Utilisation selon l'une quelconque des revendications 1 à 7, **caractérisée en ce que** la surface (7) du côté opposé à la couche bitumineuse (2) du composé de plastique est réalisée de manière à être antidérapante.

9. Utilisation selon la revendication 8, **caractérisée en ce que** la configuration antidérapante est réalisée grâce à un revêtement.

10. Utilisation selon la revendication 9, **caractérisée en ce que** le revêtement est appliqué en retrait par rapport aux couches de feuilles (4, 6) et/ou à la masse bitumineuse (2) au moins le long d'un bord du composé.

11. Utilisation selon l'une quelconque des revendications 8, 9 ou 10, **caractérisée en ce que** la configuration antidérapante est réalisée grâce à un gaufrage au moins partiel de la feuille superficielle.

12. Utilisation selon la revendication 11, **caractérisée en ce que** le gaufrage est réalisé en retrait au moins le long d'un bord du composé.

13. Utilisation selon l'une quelconque des revendications 8 à 12, **caractérisée en ce que** la configuration antidérapante est réalisée grâce à une feuille co-extrudée du type SPS.

14. Utilisation selon l'une quelconque des revendications 8 à 13, **caractérisée en ce que** la configuration antidérapante est réalisée grâce à un élastomère thermoplastique avec un complexe métallocène.

15. Utilisation selon l'une quelconque des revendications 1 à 14, **caractérisée en ce que** chaque couche de feuille est combinée selon sa stabilité thermique.

16. Utilisation selon l'une quelconque des revendications 1 à 15, **caractérisée en ce que** chaque couche de feuille (4, 6) est combinée selon sa rigidité mécanique.

17. Utilisation selon l'une quelconque des revendications 1 à 16, **caractérisée en ce qu'**un agent adhésif (5) et/ou une colle sont prévus entre deux couches (4, 6) superposées.

18. Utilisation selon l'une quelconque des revendications 1 à 17, **caractérisée en ce qu'**une couche barrière en particulier pour des huiles minérales, de l'oxygène et/ou un rayonnement UV est prévue entre deux couches de feuilles (4, 6) superposées.

19. Utilisation selon l'une quelconque des revendications 1 à 18, **caractérisée en ce qu'**une couche de vernis est prévue comme barrière, en particulier pour des huiles, de l'oxygène et/ou un rayonnement UV.

20. Utilisation selon l'une quelconque des revendications 1 à 19, **caractérisée en ce qu'**un revêtement antiadhésif (3) est prévu sur la surface du lé bitumineux (2) opposée aux couches de feuilles (4, 6).

21. Utilisation selon la revendication 20, **caractérisée en ce qu'**un papier antiadhésif ou une feuille antiadhésive est prévu comme revêtement antiadhésif (3).

22. Utilisation selon la revendication 20 ou 21, **caractérisée en ce que** le revêtement antiadhésif (3) est revêtu de silicone.

23. Utilisation selon l'une quelconque des revendications 20, 21, 22, **caractérisée en ce que** le revêtement antiadhésif (3) se compose de plusieurs sections.
